# EUROPEAN PATENT SPECIFICATION

(11) **EP 0 698 647 B1**
(45) Date of publication and mention of the grant of the patent: **15.11.2000**
(21) Application number: 94113225.0
(22) Date of filing: 24.08.1994
(51) Int. Cl.: C09J 101/28

(54) **Process for applying a covering to a substrate**
Verfahren zum Aufbringen eines Überzugs auf einem Substrat
Procédé pour appliquer un revêtement à un substrat

(43) Date of publication of application: 28.02.1996
(73) Proprietor: AQUALON COMPANY, Wilmington, Delaware 19899-8740 (US)
(72) Inventor: Riese-Martin, Monica, B-1933 Sterrebeek (BE); Podlas, Thomas J., Hockessin, Delaware 19707 (US)
(74) Representative: Lederer, Franz, Dr.

(56) References cited:
- EP-A- 0 416 405
- EP-A- 0 482 533
- BE-A- 680 334
- US-A- 5 268 466
- DATABASE WPI Week 7615, Derwent Publications Ltd., London, GB; AN 76-27363X & JP-A-51 023 535 (KYORITSU YUKI KK) 25 February 1976
- CHEMICAL ABSTRACTS, vol. 79, no. 6, 13 August 1973, Columbus, Ohio, US; abstract no. 32843, 'Water-soluble cellulose ethers with high solubility' & JP-A-48 026 235 (SHIN-ETSU CHEMICAL INDUSTRY CO.) 6 April 1973

## Description

This invention relates to Fluid Polymer Suspensions (FPSs) that contain water, a dissolved salt, methylcellulose(s) (MC) and other optional ingredients in suspended form that are useful to prepare wallpaper paste adhesives, and in particular is concerned with a process for applying a covering to a substrate.

Non-prepasted wallpapers are attached to a wall by preparing a paste on-site and brushing it on the wallpaper, after which the wallpaper is applied to the wall. Methylcellulose is a common adhesive in such pastes. Other ingredients may also be present, e.g. spray-dried vinyl or ethylene-vinyl latices. Starches or sodium carboxymethylcellulose may be used instead of the methylcellulose. Wallpaper pastes are sold in a granular, dry powder form and dispersed on-site by the user.

Dispersion of the dry powder is time-consuming and inconvenient. A typical procedure, the directions on the container of a commercial dry wallpaper paste, is as follows:
- Add the dry powder to the requisite water; mix for 5 minutes;
- let the mixture slake for 2-3 minutes;
- re-stir; let the mixture sit for 20 minutes;
- stir briefly.

The paste should now be ready to be used. The total elapsed time from the start of preparation is approximately 30 minutes.

There are newer, so-called "instant" dry pastes available in the marketplace. Typically, these are prepared as follows:
- Add the dry powder quickly into cold water while stirring;
- Continue to stir for approximately 3 minutes;
- Stir vigorously for a brief time, until the mixture appears smooth and homogeneous.

It is seen that the total elapsed time is considerably shortened, typically to about 5-6 minutes. However, it is necessary to apply considerable effort while stirring, and in fact, mechanical stirring is preferred by many to ensure homogeneity.

Dispersion of the dry powder is problematic. There is a tendency for lump formation as the solids rapidly hydrate upon addition to the water. Considerable lumping will increase the mixing and slake time so that there would be a significantly increased preparation time over and above the typical times given above, for both the conventional and the so-called "instant" pastes.

The important properties for wallpaper pastes are:
- Lump-free, rapid dissolution in water with minimum effort;
- good adhesion of the wallpaper to the substrate upon drying;
- high adhesion in the wet phase;
- high initial tack but with good correction possibility (adjustability);
- good wetting and covering of the back side of the wallpaper;
- stability against temperature changes, cement and lime.

There are a large number of dry commercial products that fulfill all except the first of the above important properties. Improved wallpaper pastes, showing very rapid dissolution without the problem of lump formation and with minimum applied shear are obviously desirable. Not only would this result in an increase in the total square footage of wall being covered in a given period of time, but it would also do away with the necessity of mechanical mixing to ensure such lump-free pastes and/or obviate the need for the individual to stir the mixture vigorously, which may not be possible for certain individuals due to physical or other limitations.

The present invention relates to a process for applying a covering to a substrate comprising adding a fluid polymer suspension including at least one methylcellulose derivative to water while gently agitating to form a paste of suitable viscosity, applying the paste to a covering or a substrate, and applying the covering to the desired substrate.

The aqueous fluid suspension according to the present invention enables the user to rapidly, with minimal effort and without the need for automated equipment, prepare wallpaper pastes that are at least equivalent in all ways to currently available dry products, and which have the distinct and invaluable advantages of easy, lump-free preparation, minimal slake time, and therefore increased output.

The wallpaper pastes according to the present invention can be prepared by pouring the aqueous fluid suspension into water; mixing gently for 15-30 seconds, allowing the mixture to slake and develop viscosity for about 2 minutes followed by brief stirring.

The wallpaper paste is now ready to be used. It is not necessary to mix vigorously while or immediately after the fluid suspension is being added to the liquid. Low shear stirring is sufficient. The fluid suspension disperses easily with minimal agitation; no lumping occurs and homogeneous pastes are obtained within 1 or 2 minutes or even less.

The fluid suspensions of this invention are storage-stable and their performance is not affected by usual storage times.

The methylcellulose contained in the fluid suspensions of the present invention preferably is one having a viscosity of at least 10,000 mPas (cps) (at 2% concentration in water). It is also possible to use a blend of two or more viscosity types of methylcellulose, one having a viscosity of at least 10,000 mPas (cps) (at 2% concentration in water) and the other having a viscosity of 200 - 1000 mPas (cps) (at 2% concentration in water).

The inorganic salt used as suspension aid in the fluid suspension preferably is one or more selected from the group consisting of sodium formate, magnesium sulfate, ammonium sulfate and ammonium phosphate. Sodium formate is most preferred. Other salts that may be used to prepare the suspensions are disclosed in US patents 4,883,536 and 4,883,537.

It should be noted that while methylcellulose is the preferred adhesive for this invention, it can be partly replaced by other adhesives like starches and sodium carboxymethylcelluse (CMC).

Depending on the viscosity of the methylcellulose used and the desired viscosity of the fluid suspension to be obtained it is possible to incorporate a varying amount of methylcellulose into the fluid suspensions. In general, the fluid suspensions will contain 10 - 50% by weight of methylcellulose, preferably 20 - 30% by weight.

Accordingly the amount of the inorganic salt used as a suspension aid will vary between 15 and 45% by weight and will preferably amount to 20 - 35% by weight in the fluid suspension.

In a particularly preferred embodiment the aqueous fluid suspension will contain 15 - 25% by weight of methylcellulose and 22 - 30% by weight of sodium formate.

The suspensions of the present invention may additionally contain a latex binder, preferably polyvinyl acetate (PVAC). The latex binder may be present in an amount of 5 - 20% by weight, preferably 6 - 12% by weight.

The fluid suspensions additionally may also contain a stabilizing agent, preferably xanthan gum, to prevent settling or stratification.

While it is known that many inorganic salts have a deleterious effect on the adhesive bond provided by methylcellulose and methylcellulose derivatives, it has been found that the organic salts used in the present invention as suspension aids do not prejudice the excellent bonding obtained with the wallpaper pastes obtained from the aqueous fluid suspensions of the present invention.

Moreover, it has been found that the inclusion of organic carboxylic acids or their salts, such as citric acid, fumaric acid and their salts, when incorporated into the suspensions of the present invention, will help to prevent any loss of adhesion capacity. Sodium citrate is a particularly preferred organic acid salt. The organic acid or its salt may be present in small quantities, generally in the range of 1 -10% by weight, preferably 2 - 4% by weight.

The fluid suspensions may also contain other optional ingredients that are known in the wallpaper paste art.

While it is a fact that many dry blends of cellulose ethers, when added to water, thicken in short time periods, resulting in thick, unworkable dispersions, such a tendency was not observed with the fluid suspensions of the present invention. While in instances where wallpaper pastes prepared from dry ingredients in a conventional manner thicken rapidly and excessively, it was found that the fluid suspensions of the present invention do not show such thickening and result in a wallpaper paste with useful lifetimes up to at least 10 times longer than the pastes prepared conventionally.

In general the suspensions of the present invention are aimed to show a viscosity in the range of 700-1600 mPas (cps), preferable 800-1400 mPas (cps) (Brookfield LVT, 30 rpm). This renders them easily pourable and pumpable.

As pointed out above, the fluid suspensions of the present invention can be used for making a wallpaper paste by dilution in water. The amount of water to be used depends on the viscosity of the suspension and the desired viscosity of the wallpaper paste. In general the suspensions are diluted by addition to water in such an amount as to obtain a paste containing 1 - 10% by weight, preferable 1.5 - 6% by weight of methylcellulose adhesive.

While the invention has been described in its use to provide a wallpaper paste, it is obvious to the expert that it can be used to prepare similar adhesive pastes like billboard adhesives, tail-tie adhesives, paper-to-paper adhesives, adhesives for labels, stamps, envelopes, etc. and essentially for all purposes, whenever paper or a paper-like product is to be bonded to another substrate.

The invention will be further illustrated by the following non-limiting examples.

### Examples 1 - 3

Fluid suspensions for wallpaper pastes were prepared from low viscosity methylcellulose (MC 400: 2% aqueous viscosity of 400 mPas (cps)) and high viscosity methylcellulose (MC 12,000: 2% aqueous viscosity of 12,000 mPas (cps)).

The compositions of the suspensions follow from the following table:

| | Example 1 | Example 2 | Example 3 |
|---|---|---|---|
| Sodium formate | 26.0 % | 26.0 % | 26.0 % |
| MC 400 | | 10.0 % | 4.0 % |
| MC 12,000 | 20.0 % | 10.0 % | 8.0 % |
| PVAC | | | 8.0 % |
| Xanthan | 0.18 % | 0.18 % | 0.18 % |
| Water (1) | 53.82 % | 53.82 % | 53.82 % |
| Viscosity (2) | 1120 mPas (cps) | 1000 mPas (cps) | 880 mPas (cps) |

| | | | |
|---|---|---|---|
| (1) Water contains 0.10 % biocide | | | |
| (2) Brookfield LVT, 30 rpm. | | | |

All were free-flowing suspensions. Example 3 was not as smooth as the others, a trait often noted when a latex is a part of the formulation. Wallpaper pastes were prepared from these suspensions. Dry controls were used for comparison purposes. Results are shown below. The suspensions were allowed to age under ambient conditions for 3 months. After this time, they were again examined. Changes, if any, are described below. The suspension of Example 1 did thicken slightly, but readily reverted to its original consistency after slight mixing. After 3 months, the suspensions were again used to prepare wallpaper pastes, and re-evaluated.

Wallpaper pastes prepared from the suspension of Example 1 are general all-purpose products. The total adhesives level in the paste was about 1.6 - 1.7%. Pastes from Example 2 have about the same adhesives content, but are of much lower viscosity and will be preferred by many users because of this property. Pastes from Example 3 are primarily for structured (textured) and heavy wallpapers. Adhesives levels are typically about 4.5 - 5%. The suspension of Example 3 had a finite lifetime that is within the time frame of the current laboratory study.

### Evaluation of Wallpaper Pastes Prepared from Fluid Suspensions

Wallpaper pastes were prepared using the suspensions of Examples 1, 2, and 3, using the technique described above. They were used to attach wallpaper to wallboard (sheetrock). Controls using dry adhesives, and commercial products were used for comparison purposes. All pastes were evaluated at least in triplicate.

Different grades of wallpaper were used: normal and heavy weight, smooth and textured. Results with all grades were similar.

After applying the pastes to the wallpaper and applying the wallpaper to the substrate, the pastes were evaluated, noting in particular the six important properties of wallpaper pastes listed above.

The adhesion of the wallpaper to the substrate is described in two ways. First, "% adhesion" gives the total area of substrate that remains covered with wallpaper after attempts are made to remove the wallpaper by industry-accepted techniques. The given "bond strength" is a subjective evaluation only.

### Suspension of Example 1 and Controls

Suspension of Example 1: 25 g was poured into 286.5 g of water while mixing for 30 seconds. The suspension dispersed easily, no lumping was noted, and thickening was homogeneous. This paste, designated A, contains 1.6% high viscosity MC, and had a viscosity of 6350 mPas (cps). A control, made up of 1.6% methylcellulose of the same grade as used in the fluid suspension, but added to water with stirring, was the control. Lumping occurred upon addition of the dry MC to the water. Total elapsed time before the paste was ready to use was slightly greater than 30 minutes. This control paste had a viscosity of 6100 mPas (cps). A second control was also used, a commercial dry product known to contain an adhesive very similar to the one used in the fluid suspension (FPS) and dry control. With this commercial product, about 30 minutes elapsed time was needed before it was ready to be used.

### RESULTS:

### Wallpaper Paste A:

- < 30 minutes:: 95 - 100% adhesion, very strong bonding of wallpaper to sheetrock substrate.
- 10 weeks:: same as above
- 3 months:: same as above

### Dry Laboratory Control

Results were essentially the same as shown above. This shows that the performance is not changed by preparing the paste from the FPS.

### Commercial Dry Control

Results were as above.

### Suspension of Example 2 and Controls

Suspension of Example 2: 25 g was poured into 286.5 g of water while mixing for 30 seconds. Ease of dispersion, etc. were as with Example 1. This wallpaper paste, designated B, contained 1.6% MC (0.8% low viscosity, 0.8% high viscosity), and had a viscosity of 1320 mPas (cps). The dry control prepared with the same MC grades had a viscosity of 1200 mPas (cps). As in Example 1, about 30 minutes was necessary before the paste was ready to use.

### RESULTS:

### Wallpaper Paste B:

- < 30 minutes:: 75 - 90% adhesion, strong bonding, but not as strong as with 100% high viscosity MC.

In general, there were no changes in wallpaper pastes made as the FPS aged, up to 3 months. Wallpaper pastes prepared from the dry adhesives were the same. Bond strengths and total coverage would be increased if the total adhesives level were increased. The importance of this example is that it has now been shown that combinations of low and high viscosity MCs may be used in FPS form. The concern was that the lower M.W. MC would solubilize to some degree with the passage of time, and that its use in FPS form would not be practical. This was not the case.

### Suspension of Example 3 and Controls

Suspension of Example 3: 75 g were poured into 240 g water while mixing for 30 seconds. Ease of dispersion etc. were as above. This wallpaper paste, designated C, contained 4.75% adhesives (1.9% high viscosity MC, 0.95% low viscosity MC, and 1.9% PVAC), and had a viscosity of 760 mPas (cps). The dry control prepared from the same adhesives had an initial viscosity of less than 1000 mPas (cps), but, as described immediately below, it thickened rapidly. If this paste was used within 1 hour or so after preparation, performance was excellent. An extremely strong bond was obtained, with 100% coverage.

### RESULTS:

### Wallpaper Paste C:

- < 30 minutes:: 95 - 100% adhesion, very strong bond
- 1 week:: 65 - 70% adhesion, very strong bond
- 10 weeks:: as above

### Dry Laboratory Control

A very strong bond with 95 - 100% coverage was obtained throughout the 3 month testing period, so long as the paste was used within about 1 hour after preparation. As stated above, it was noted that the wallpaper paste prepared from the dry materials thickened significantly over a short period of time. The paste had an initial Brookfield viscosity of about 1000 mPas (cps), but, within 5 minutes, it was 2600 mPas (cps), in 2 hours it was 26,000 mPas (cps) and was unworkable. This viscosity rise was not noted with paste C, it being essentially unchanged even after 24 hours.

This particular paste gave excellent bonding with heavy, textured wallpaper. Hence, the FPS form makes its use practical. But, it also must be noted that in the time period between 10 weeks and 3 months the suspension from Example 3, when used to prepare wallpaper pastes, gave a suspension that developed viscosity very slowly, and that initially contained small gel particles. Thickening and further homogenization eventually occurred, but for practical purposes, the lifetime of the FPS can be considered to have ended in this time period. It is likely that formulation changes will do away with this apparent insolubilization phenomenon.

### Example 4

Because of the reproducible adhesion loss noted with wallpaper paste C prepared from the suspension from Example 3 the following modified fluid suspension was prepared and compared with that of Example 3:

| | Example 3 | Example 4 |
|---|---|---|
| Na formate content | 26.0% | 23.4% |
| Na citrate content | --- | 2.6% |
| Brookfield Viscosity | 880 mPas (cps) | 920 mPas (cps) |

Except for the above difference, the fluid suspensions were identical. Wallpaper paste D was prepared from the suspension of Example 4.

### RESULTS:

### Wallpaper paste D:

- < 30 minutes:: 95 - 100% adhesion, very strong bond
- 1 week:: same as above
- 10 weeks:: same as above

It is seen that the presence of (sodium) citrate prevented the adhesion loss that was noted with wallpaper paste C prepared from the suspension of Example 3.

## Claims

1. A process for applying a covering to a substrate comprising
adding a fluid polymer suspension including at least one methylcellulose derivative to water while gently agitating to form a paste of suitable viscosity,
applying the paste to a covering or a substrate, and
applying the covering to the desired substrate.

2. The process of claim 1, wherein the fluid polymer suspension comprises at least one methylcellulose derivative, an appropriate fluid polymer suspension salt, and water.

3. The process of claim 2, wherein the fluid polymer suspension includes a member selected from the group consisting of a suspending aid, poly(vinyl alcohol), poly(vinyl acetate) and mixtures thereof.

4. The process of claim 3, wherein the fluid polymer suspension contains, in addition to the fluid polymer suspension salt, a minor quantity of a salt of citric or fumaric acid.

5. The process of claim 4, wherein the salt of the organic carboxylic acid is sodium citrate.

6. The process of claim 2, wherein the salt used to prepare the fluid polymer suspension is an inorganic salt with sufficient solubility to prevent hydration of the methylcellulose.

7. The process of claim 6, wherein the salt is selected from the group consisting of sodium formate, diammonium phosphate, diammonium sulfate, sodium chloride, or epsom salts.

## Patentansprüche

1. Verfahren zum Aufbringen eines Überzugs auf ein Substrat umfassend, dass man
eine fließfähige Polymersuspension mit mindestens einem Methylcellulosederivat zu Wasser zugibt, wobei vorsichtig bewegt wird, um eine Paste mit geeigneter Viskosität zu bilden,
die Paste auf einen Überzug oder ein Substrat aufträgt und
den Überzug auf das gewünschte Substrat aufbringt.

2. Verfahren nach Anspruch 1, worin die fließfähige Polymersuspension mindestens ein Methylcellulosederivat, ein geeignetes Salz für die fließfähige Polymersuspension und Wasser umfasst.

3. Verfahren nach Anspruch 2, worin die fließfähige Polymersuspension ein Mitglied ausgewählt aus der Gruppe bestehend aus einem Suspensionshilfsmittel, Poly(vinylalkohol), Poly(vinylacetat) und Mischungen davon enthält.

4. Verfahren nach Anspruch 3, worin die fließfähige Polymersuspension zusätzlich zu dem fließfähigen Polymersuspensionssalz eine geringere Menge eines Salzes von Citronen- oder Fumarsäure enthält.

5. Verfahren nach Anspruch 4, worin das Salz der organischen Carbonsäure Natriumcitrat ist.

6. Verfahren nach Anspruch 2, worin das Salz, das zur Herstellung der fließfähigen Polymersuspension verwendet wird, ein anorganisches Salz mit ausreichender Löslichkeit ist, um die Hydratisierung der Methylcellulose zu verhindern.

7. Verfahren nach Anspruch 6, worin das Salz ausgewählt ist aus der Gruppe bestehend aus Natriumformiat, Diammoniumphosphat, Diammoniumsulfat, Natriumchlorid oder Epsom-Salzen.

## Revendications

1. Procédé d'application d'un recouvrement sur un substrat comprenant :
l'addition d'une suspension de polymère fluide comprenant au moins un dérivé de méthylcellulose à de l'eau tout en agitant modérément pour former une colle d'une viscosité appropriée,
l'application de la colle sur un recouvrement ou un substrat, et
l'application du recouvrement sur le substrat désiré.

2. Procédé suivant la revendication 1, dans lequel la suspension de polymère fluide comprend au moins un dérivé de méthylcellulose, un sel pour suspension de polymère fluide approprié et de l'eau.

3. Procédé suivant la revendication 2, dans lequel la suspension de polymère fluide comprend un membre du groupe comprenant un adjuvant de mise en suspension, un poly(alcool vinylique), un poly(acétate de vinyle) et leurs mélanges.

4. Procédé suivant la revendication 3, dans lequel la suspension de polymère fluide contient, en plus du sel pour suspension de polymère fluide, une petite quantité d'un sel d'acide citrique ou fumarique.

5. Procédé suivant la revendication 4, dans lequel le sel de l'acide carboxylique organique est du citrate de sodium.

6. Procédé suivant la revendication 2, dans lequel le sel utilisé pour préparer la suspension de polymère fluide est un sel inorganique avec une solubilité suffisante pour empêcher une hydratation de la méthylcellulose.

7. Procédé suivant la revendication 6, dans lequel le sel est choisi dans le groupe comprenant le formiate de sodium, le phosphate de diammonium, le sulfate de diammonium, le chlorure de sodium et les sels d'Epsom.
